# EUROPEAN PATENT SPECIFICATION

(11) **EP 3 996 043 B1**
(45) Date of publication and mention of the grant of the patent: **18.01.2023**
(21) Application number: 20205743.6
(22) Date of filing: 04.11.2020
(51) Int. Cl.: G06T 7/60

(54) **METHOD OF MEASURING A PIECE OF CLOTHING**
VERFAHREN ZUR MESSUNG EINES KLEIDUNGSSTÜCKS
PROCÉDÉ DE MESURE D'UN VÊTEMENT

(43) Date of publication of application: 11.05.2022
(73) Proprietor: Sizze GmbH, 14109 Berlin (DE)
(72) Inventor: KRASHENNIKOV, Anton, 14469 Potsdam (DE)
(74) Representative: Wallinger Ricker Schlotter Tostmann

(56) References cited:
- WO-A1-2019/133932
- Aarila Dots Oy: "Study of the automatic garment measurement REPORT", , 9 September 2019 (2019-09-09), pages 1-13, XP055814771, Retrieved from the Internet: URL:https://new.robocoast.eu/wp-content/up loads/2020/09/Feasibility-study-Automatic- garment-measurement_Aarila-Dots.pdf [retrieved on 2021-06-17]
- Wei Liu ET AL: "SSD: Single Shot MultiBox Detector", Advances in Databases and Information Systems, 1 January 2016 (2016-01-01), pages 21-37, XP055553347, Cham DOI: 10.1007/978-3-319-46448-0_2 ISBN: 978-3-319-10403-4 Retrieved from the Internet: URL:https://arxiv.org/pdf/1512.02325.pdf
- UNKNOWN ET AL: "Automatic Measurement of Garment Sizes Using Image Recognition", PROCEEDINGS OF THE INTERNATIONAL CONFERENCE ON GRAPHICS AND SIGNAL PROCESSING, ICGSP '17, 1 January 2017 (2017-01-01), pages 30-34, XP055814772, New York, New York, USA DOI: 10.1145/3121360.3121382 ISBN: 978-1-4503-5239-0

## Description

The present invention relates to a method for determining a fit of a piece of clothing for a person who intends to wear the piece of clothing, comprising a method of measuring a piece of clothing. More specifically, relevant measurements of a piece of clothing are determined from an image of the piece of clothing. The invention particularly further relates to a respective computer program, which may be implemented in the form of an application for a mobile device, personal computer (PC) or other suitable computing device.

### Background

Pieces of clothing (also referred to as garments), such as jackets, T-shirts, shirts with long sleeves or short sleeves, trousers, shorts, skirts, etc. are available in different sizes to fit different customers. Although garments usually have size indications, such as small (S), medium (M), large (L), extra-large (XL) or other measurements, the actual size, shape and cut may vary to a certain extent. This makes it difficult for customers to choose the right size.

More and more clothing is purchased online and the customer may select the desired size. However, while there are different sizes available in fashion stores, which can be tried on directly, this is not possible in online purchases. This urges customers to order pieces of clothing in more than one size and to return all but one or even all of the delivered items. The number of returned objects is increasing, which causes high costs for online retailers.

Therefore, sometimes pieces of clothing are measured to provide the actual size, more specifically to provide relevant measurements of the piece of clothing, such as the actual length, width, sleeve length etc. These relevant measurements may be given e.g. in centimeters such that customers can select the right size. This may decrease the number of returned objects and save costs for the resellers. However, due to a large number of pieces in online stores, measuring the pieces of clothing, i.e. determining the relevant measurements of each piece of clothing, by hand e.g. by using a measuring tape is cumbersome, time consuming and costly. It will be appreciated that the "relevant measurements" may also be referred to as "key measurements", i.e. measurements of the piece of clothing that are relevant, i.e. that characterize its size, shape and cut, typically used by the clothing industry, such as length measurements (total, sleeve, leg, etc.), width measurements (waist, neck, shoulder, etc.) or the like.

On the other hand, customer may wish to determine the actual size their own garment to selecting the correct size for new orders. However, having no experience in measuring clothes, it may be difficult to find the right points, which are crucial for the relevant measurements of a piece of clothing. People may also struggle when measuring by hand or there may be confusion about conventions and names of the correct measurements or the right way to apply a measuring tape, all of which may cause inaccurate measurements.

Aarila Dots Oy describes a method of measuring a piece of clothing in the publication "Study of the automatic garment measurement, Report", 9 September 2019 (2019-09-09), pages 1-13, XP055814771. In the described method, a garment that is laid flat on a surface is captured with a calibrated camera. The clothing type may be and then the measurement points may be detected. Finally, the physical distances between key points may be calculated converting from pixel values to millimeters or inches using the known calibration coefficients from the camera. The process can be roughly divided into four steps: camera calibration, clothing type classification, measurement point detection and physical distance calculation.

### Summary

It is an object of the present invention to provide a method for determining a fit of a piece of clothing for a person who intends to wear the piece of clothing, including a method of measuring a piece of clothing, in which an actual size of a piece of clothing, preferably relevant measurements of a piece of clothing can be determined in an easy, fast and accurate manner.

A solution is provided by the teaching of the independent claims. Preferred embodiments are defined in dependent claims.

According to one aspect of the present disclosure a method for determining a fit of a piece of clothing for a potential wearer of the piece of clothing is provided. More specifically, the below described method of measuring the piece of clothing may be combined with a method for measuring the wearer's body to estimate a fit of the piece of clothing. It is measured at least a part of the person's body for which the piece of clothing is meant to be worn to obtain at least one relevant body measurement that preferably corresponds to the at least one obtained relevant measurement of the piece of clothing.

Then a fit of the piece of clothing is estimated for the person using a fitting statistical model. The fitting statistical model is parameterized based on body measurements and clothing measurements as inputs and respective feedback on the fit of piece of clothing as outputs, wherein the distance between the estimated outputs and the real outputs is minimized, wherein the fitting statistical model is preferably obtained by machine learning, preferably Neural Networks.

The method for determining a fit of a piece of clothing comprises a method of measuring a piece of clothing. Rather than measuring the actual size of the piece of clothing directly, an image of the piece of clothing is utilized, which may show the piece of clothing from a certain point of view and under a certain viewing angle. The image is subject to image processing for perspective correction to achieve a processed image with a normalized and distortion-free representation of the piece of clothing for meaningful measurement results. An image of the piece of clothing is obtained, e.g. captured by means of an image capturing device or otherwise retrieved, e.g. loaded from a memory the image is stored on. To obtain valid measurements, the method of measuring a piece of clothing in context is applied to the image of the piece of clothing. The method of measuring a piece of clothing can be described in the form of an image processing pipeline, which consists of the following steps.
(A) Obtaining an image of the piece of clothing;
(B) Executing perspective correction of the obtained image to determine a perspective corrected image, and further calculating a scale ratio using the perspective corrected image;
(C) Extracting the piece of clothing from the perspective corrected image and transforming the perspective corrected image to a processed image with consistent format;
(D) Classifying the piece of clothing in the processed image by determining a type of the piece of clothing;
(E) Identifying a plurality of landmarks of the piece of clothing in the processed image based on the determined type of the piece of clothing; and
(F) calculating at least one relevant measurement of the piece of clothing using the identified landmarks and the scale ratio.

A reference object with known dimensions and size in a real-world measure, like centimeters, inches, etc., may be used for perspective correction, which may comprise a two-dimensional pattern, such as a two-dimensional chessboard pattern, which may have a field of n x n squares (bicolored or multicolored). Such pattern, which is subject to the same perspective distortion as the outer shape of the reference object, may facilitate determining transformation for perspective correction. It will be appreciated that any other suitable reference object may be used, including any size, shape and pattern. It may be sufficient to provide a reference object without a pattern. The reference object may also be a frame around the piece of clothing with known real-world dimensions. Also other every-day articles may be suitable reference objects, e.g. a credit card. It may be envisioned to allow selection of the type of reference object, or to manually enter the dimensions of the reference object to make them available for the image processing. Specifying the type of reference object may also facilitate its detection in the image.

If such reference object is contained in the obtained image, the first step is the detection or identification of the reference object in the image for the initial perspective correction and the calculation of the scale ratio between the image dimensions and the real world dimensions, e.g. the pixel-centimeter ratio. The reference object is thus advantageously placed in the vicinity of the piece of clothing such that in the obtained image the reference object is subject to the same perspective distortion as the piece of clothing.

Having the original shape and size of the reference object, it is possible to calculate the necessary transformations to map the reference object in the image to the original reference object. Those calculations can be applied to the whole image (or at least a portion of the image including the piece of clothing), which results in the correction of the perspective. Since every distance in a digital image can be only measured in pixels, the scale ratio (pixel-centimeter ratio) may be calculated by using the known dimensions of the reference object and by relating those to the pixel distances of the reference object in the image.

Similarly, at least one known real-world dimension, such as a known real-world distance between at least two points of the piece of clothing may be used for perspective correction, wherein the known real-world dimension is then set into a relationship to the corresponding points in the image of the piece of clothing. Thus, it will be appreciated that the term "reference object" may generally refer to a part of the obtained image the real-world dimensions of which are known, including an object separate from the piece of clothing (but placed in the vicinity of the piece of clothing) or a part of the piece of clothing itself

Alternatively or in addition to the reference object other means may be used for perspective correction. In particular, it may also be envisioned to execute the perspective correction based on a spatial relation between the obtained image and the piece of clothing. In other words characteristics may be used that are not part of the image but directly specify the spatial relation between the image plane and the piece of clothing in real-world, such as a distance from an image capturing device to the piece of clothing, more specifically, the distance from the image plane to the piece of clothing, i.e. each pixel of the image to its corresponding real-world point. The distance(s) and/or orientation may be known, e.g. because of a known and fixed position and/or orientation of the image capturing device relative to the piece of clothing, or may be otherwise determined, measured, calculated or estimated. The spatial relation may be determined by measuring a distance between an image capturing device and the piece of clothing and/or by obtaining at least two images of the piece of clothing from different points of view for which the spatial correlation is known. For instance, the spatial relation may be determined using known characteristics of the image capturing device, additional devices, dual-camera configurations, distance sensors, such as infrared (IR) distance sensors, Lidar scanners, etc. or any other technologies suitable to obtain the spatial relationship between the image and the real world.

The next step is the extraction and transformation of the piece of clothing for further processing, which is preferably achieved by a statistical model, that estimates the coordinates of the bounding box around the piece of clothing in the image. The statistical model may be parametrized for this specific task using a statistical population of images and bounding boxes as a training dataset. The image is processed to obtain a processed image. This allows providing more reliable and reproducible results. The image processing may include at least one of transferring colors from a first color space to a second color space, cropping the image, changing a resolution of the image, changing a size of the image, translating a content of the image, rotating a content of the image, and scaling a content of the image.

Using the processed image, the piece of clothing is classified for further processing, i.e. a type (or "class") of the piece of clothing is determined. The extracted piece of clothing can be used as an input to a statistical model designed and trained for the classification task. The piece of clothing may be classified by selecting the type with the highest probability among a predetermined number of types of pieces of clothing to define the type of the piece of clothing. Classes are various types of clothing, which in turn can be defined by categories such jackets, T-shirts, blouses, trousers, dresses etc. or by a combination of attributes, such as upper-body, lower-body, full-body, short-sleeve, long-sleeve, having a collar, and others.

The next step in the processing pipeline may be referred to as the annotation task. The annotation task takes the given extracted image and the class of the piece of clothing within the image to identify a plurality of landmarks of the piece of clothing based on the determined type of the piece of clothing. The annotation task may apply a statistical model for the estimation of the coordinates of the landmark points specific to the given class. More specifically, the statistical model statistical model for the estimation of the coordinates of the landmark points may be a type-specific (or "class-specific") statistical model. In order to be able to select the appropriate type-specific statistical model, a respective type-specific statistical model may be provided for each of the types available in the statistical model for the classification task described above. The landmark points, short landmarks, are used as relevant points for measurements, such as right shoulder and left shoulder to measure the shoulder width. However, different categories of clothing require distinct relevant points and distinct measurements, such as trousers and shirts.

The method of measuring of a piece of clothing therefore may include a statistical model for every possible class that can be produced by the previous step. Every class-specific statistical model is parametrized by a training set of this particular class. The number of classes corresponds to the number of class-specific statistical models used to set the landmarks. A separate statistical model can be trained for each class. The number of classes and statistical models that set the landmarks can be changed at will and the whole system can be retrained. Thus the system is dynamic in terms of the number of statistical models, which makes it possible to use the system for measuring any other classes of objects, if trained on the appropriate data set.

After the identification of the coordinates of the landmarks, distances for the relevant measurements of the given, specific clothing class in the processed image may be computed. However, those image distances will be in pixels. Using the scale ratio, e.g. pixel-centimeter ratio, it is possible to transform the calculated measurements to actual dimensions e.g. in centimeters (and therefore other real-world measurements).

A landmark point may be any point, which is suitable to characterize the piece of clothing and may depend on the type of piece of clothing. A configuration of the landmark points, e.g. including number and relative position of the landmark points, may be included in a statistical model, which is fitted to the image of the piece of clothing. The landmark points are preferably located at an outer contour of the piece of clothing defined by the detected shape of the piece of clothing, wherein the landmark points may specifically include corner points of the outer contour, i.e. of the shape of the piece of clothing. Corner points may be particularly suitable to characterize a piece of clothing as well as the respective statistical model and may distinguish different types of clothing.

Finally, using the identified landmarks, or at least a portion of the identified landmarks, a pixel distance between at least two of the identified landmarks associated with a relevant measurement of the piece of clothing may be determined and transformed to a real-world measurement using the scale ratio. The pixel distances (image distances) may include at least one image distance between at least one pair of landmark points. The pair of landmark points may include two landmark points that are located next to each other on the outer contour of the piece of clothing and/or two landmark points on opposing sides of the outer contour. In addition or alternatively, an image distance may be measured between one of the landmark points and a line defined by two others of the landmark points and/or two lines defined by two pairs of the landmark points. The line (or lines) may be a straight line connecting two landmark points. Other lines, e.g. curved lines may be used if appropriate for a relevant measurement of a piece of clothing. The

The statistical model used in this processing pipeline can be any statistical model chosen and parametrized for this task. However, Convolutional Neural Networks that are trained using conventional Machine Learning techniques, such as backpropagation, are preferred. The aim is to minimize the distances between the estimations of the given statistical model and the training dataset for the corresponding task, which represents the statistical population, consisting of image data as inputs and the expected outputs, wherein the outputs may be specific content data of the image for the respective task representing a characteristic feature of the content of the image, such as landmarks, type of clothing, bounding box as set forth above or other data related to the content of the image that may be desired during the image processing pipeline.

The above described method of measuring a piece of clothing is able to create a good user experience as the functionality is done by the method, in particular a computer program ("app") run on a suitable computing device, e.g. a mobile device. The user only has to capture or otherwise obtain the image of the piece of clothing, the size of which shall be determined, and the program is able to perform the necessary steps automatically, in particular identify the shape of the piece of clothing and calculate relevant measurements to output actual dimensions, e.g. in centimeters.

While the above described method may be particularly suitable for measuring two-dimensional (2D), i.e. flat objects, such as a piece of clothing spread on a flat surface, the method may be applied for measuring any objects. In particular, it may be envisioned to measure other two-dimensional objects or even three-dimensional objects, such as furniture or the like.

Measuring a piece of clothing (or other object), i.e. determining the actual size of the piece of clothing may enable a seller or customer to determine the right size of a piece of clothing, particularly in order to find the appropriate size for a wearer as described above, which may reduce costs and effort on either side. However, it will be appreciated that the determined actual size of a piece of clothing may be utilized in any other application. For instance, the calculated actual distance(s) may be input to an apparatus for manufacturing or reworking a piece of clothing so as to set or adjust control parameters of the apparatus in a manufacturing process of future pieces of clothing of the same type or a reworking process of the piece of clothing. This may improve accuracy of the processes as the actual dimensions of a piece of clothing are used as input parameters. Thereby, the number of rejects in a manufacturing or reworking process may be reduced, and thus material saved, and costs reduced. Further, results of manufacturing or reworking processes may be evaluated, e.g. by comparing the actual values with target values, in order to optimize future processes, e.g. by further inputting comparison results to the processes. In a manufacturing process, an apparatus may be controlled, e.g. for cutting fabric, assembling cut pieces, making seams (with respect to shape and position of seams), etc. In a reworking process, the actual dimensions may be used for tailoring the piece of clothing or to find the right size and/or position for a seam, collar, embroidery, applique, flocking, sticker, etc., which may be added to the piece of clothing.

The body measuring may comprise the following steps, which are similar to those described above for the clothing measuring.
(a) Obtaining at least one image of the part of the body. Preferably at least two images are obtained, including a first image from a frontal point of view and a second image from a side point of view. It may also be envisioned to use four images (front, back, left, right) for more accurate measuring.
(b) Executing perspective correction of the obtained image(s) to determine a respective perspective corrected image, and further calculating a scale ratio using the perspective corrected image. The perspective correction may be executed as described above for the method of measuring a piece of clothing. Also the following step are executed correspondingly.
(c) Extracting the part of the body from the perspective corrected image and transforming the perspective corrected image to a processed image with consistent format;
(d) Identifying a plurality of landmarks of the part of the body in the processed image. The landmarks may correspond to respective landmarks that are identified for the piece of clothing. While in the front and back view these landmarks may be substantially the same, the may be different from the side views but likewise correspond to the same relevant measurement; and
(e) Calculating at least one relevant measurement of the part of the body using the identified landmarks and the scale ratio. Particularly, information from all obtained images may be used to calculate the relevant measurement to account for the three-dimensional form.

The relevant body measurement(s) and the corresponding relevant measurement(s) of the piece of clothing are then input into a statistical model (e.g. neuronal network) for estimating the fit of the piece of clothing. This may result in general statements like "good fit", "too small", "to large" and/or may include more distinct statements like "sleeves to long/too short", "too tight" etc. Furthermore, if the wearer indicates a preferred style, such as "skinny" or "loose" the evaluation results and statements may be adapted, e.g. compared to a "regular" fit. The fitting statistical model may be trained by machine learning using data of customers and their respective feedback about the fit of a piece of clothing that they have tried on, for instance from those customers who have returned their purchases. But also data and feedback from satisfied customers that keep their purchased and good fitting clothes may be included in the training for the fitting statistical model.

The evaluation how well a piece of clothing fits on particular person is a task that is non-trivial in the sense that it is not enough to retrieve the measurements of the person and the piece of clothing. There might be stylistic variations in the way the piece of clothing is designed as well as the purpose it was designed for. In the same manner, there might be stylistic preferences of the person who is interested in this piece of clothing. Therefore, the matching of body measurements and clothing measurements requires a system that can compensate for those non-quantifiable properties of the piece of clothing and the human to evaluate how well the piece of clothing fit. The system that matches the measurements of the body and the garment is a statistical model or a composed of statistical model.

The training / parametrization step requires the following historical data: body measurements, clothing measurements, feedback on how well the piece of clothing did fit. This feedback should be quantifiable as a numeric value. The input parameters of the statistical model are body measurements and garment measurements. The output value is a value that can be mapped to a scale between 0 and 1, whereby 0 may represent a bad fit while 1 may represent a perfect fit. The difference between the predicted value and the actual value can be used for the calculation of the cost/ loss function for e.g. the backpropagation algorithm or another to adjust the parameters of the fitting statistical model. The fitting statistical model therefore estimates how well the piece of clothing will fit given the measurements of the piece of clothing and the body measurements of the person using historical feedback, that was used for training the statistical model.

A composition of statistical models could be used to discriminate the subjective preferences of the human, e.g. categorized in stylistic preference like loose fit, slim fit, skinny fit. For each category, there can be a statistical model that uses the inputs and estimates how well the piece of clothing will fit on the person given the body measurements of the person and his stylistic preferences in general or this specific piece of clothing.

In another aspect of the present disclosure, program code is provided which is configured to, when loaded into a computing device having at least one processor, perform the method(s) described above when executed by the at least one processor.

In yet another aspect a computing device is provided which comprises at least one processor and at least one memory having stored thereon program code configured to perform the above described method(s) when executed by the at least one processor. The step of obtaining the image may include retrieving an image stored in the at least one memory. Alternatively or in addition, the image may be retrieved via a data connection, e.g. downloaded from a network, such as a local network or the internet. Still further alternatively or in addition, the computing device may comprise an image capturing device, such as a camera, wherein the image is captured using the image capturing device. For instance, the computing device may be a mobile device, such as a mobile phone, running the program code as an application ("app"). It will be appreciated that the computing device may be a stationary device configured to execute the method.

### Detailed description

The invention will be explained by way of example and non-limiting manner with reference to the accompanying drawings, in which:
- Fig. 1: shows the image processing pipeline.
- Fig. 2: shows an original image of a jacket with a reference object.
- Fig. 3: shows the original reference object.
- Fig. 4: shows the image after perspective correction.
- Fig. 5: shows the extracted and preprocessed image.
- Fig. 6: shows the exemplified classification of the piece of clothing.
- Fig. 7: shows example of detected landmarks.
- Fig. 8: shows examples of relevant measurements that can be obtained given the detected landmarks.

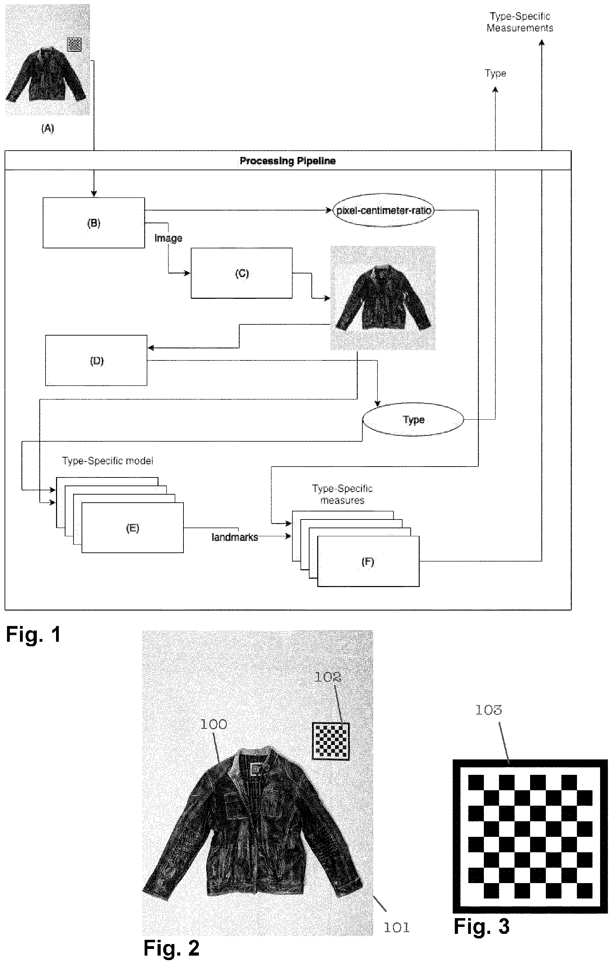

Referring to Fig. 1, an example of an image processing pipeline is illustrated. As will be explained in greater detail below, an image of a piece of clothing, such as a jacket in the illustrated example, is input into the pipeline and may be processed by steps (A) to (F) to obtain as an output characteristics of the piece of clothing, in particular its relevant measurements. Since the type of the piece of clothing is determined during the processing, the type may also be output and the measurements may be referred to as type-specific measurements.

In Fig. 2 an image 101 of a piece of clothing 100 in the form of a jacket is shown. The image 101 may have any size, format, color and resolution and will be subject to image processing as will be described in more detail below. Using a processed image 105 allows for more reliable and reproducible results of the measurement and may provide a more robust measurement method compared to a method which only uses the original image 101.

The illustrated example refers to measuring actual dimensions of a jacket as an example. It will be appreciated that the method may be applied to any other piece of clothing or garment, the actual size of which, more specifically relevant measurements, shall be measured, such as a shirt, trousers, a skirt, a blouse etc., wherein a statistical model of the respective piece of clothing is applied. The type or class of the piece of clothing is determined from the image automatically in the classification step.

After the image 101 of the jacket 100 has been obtained, either by capturing the image 101 with a camera or otherwise loading or downloading the image 101 in order to input the image 101 to the method, the image 101 may be processed as will be described below. It will be appreciated that the obtained image may already be partially or completely processed such that the method can skip directly to the step of identifying the piece of clothing in the image. It will be appreciated that the following specific image processing is only exemplary and that any other color, size or resolution transformations of the image may be envisioned which is suitable to prepare the image to enhance the measurement of the piece of clothing.

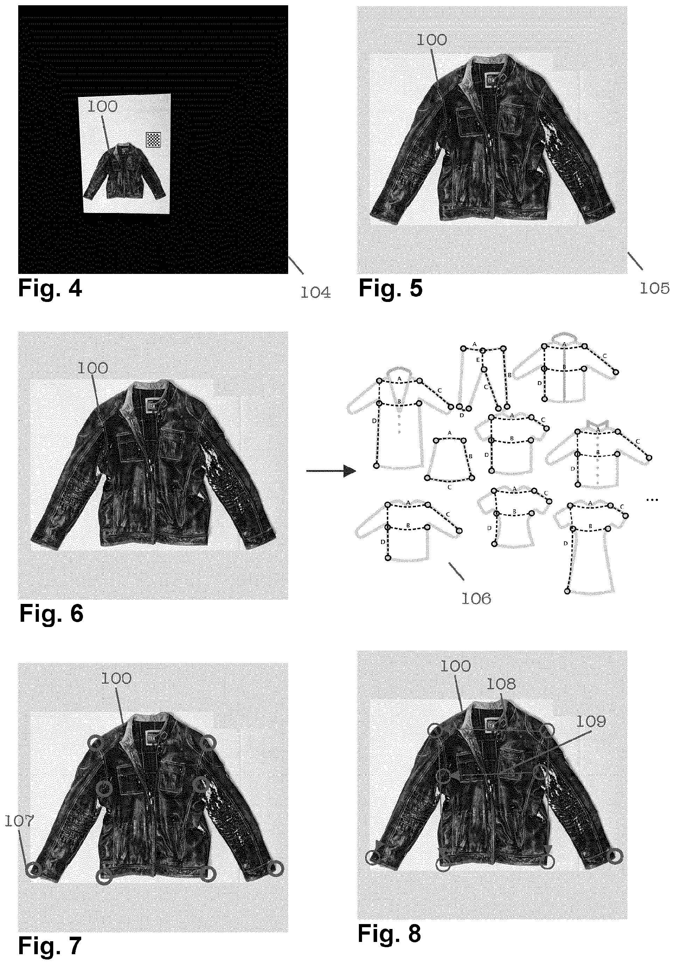

Referring to Figs. 4 to 8, it is illustrated how the image 101 is prepared, more specifically how the image 101 is processed to obtain the processed image 105 in accordance with the image processing pipeline illustrated in Fig. 1. The image may be rotated, translated and scaled as far as necessary, in particular to properly orient the jacket 100 in the image, e.g. neck up, bottom down, sleeves right and left horizontally aligned. The image 101 may then be subject to color transformation, in particular to obtain a grayscale image 105 from a color image 101. The image 101 may be cropped to fit the jacket 100 and the processed image 105 may have a predetermined shape, e.g. square as shown in Fig. 5. For instance, the processed image 105 may have a size of 300 x 300 pixels.

The jacket 100 is preferably centered and fills almost the maximum area available, but without any part of it crossing boundaries of the image 105. The original image background is preferably single-color and light (ideally white or black). When converted to grayscale, the background will then be light-grey or white. It will be appreciated that the jacket 100 can be white, but stronger contrast to the background is preferred as will be explained below.

The image processing in this embodiment considers a reference object 102 included in the image 101. The reference object 102 in the image 101 represents the original reference object 103 with the known dimensions and size. An exemplary reference object 103 having a square shape with chessboard pattern is shown in Fig. 3. Any other suitable reference object may be used instead. The method then comprises locating the reference object 102 in the original image 101, respectively, and calculating a conversion factor, i.e. the pixel-centimeter ratio as the actual dimensions of the reference object 103 are known. It may be preferable to locate the reference object 102 in the original image 101 and consider its size and/or distortion for processing the image 101. For instance, if the image 101 is not taken at an orthogonal angle relative to a plane in which the jacket is positioned, an angle correction may be applied to get a normalized image 104, i.e. an image as if it was taken at an orthogonal angle. However, the reference object 102 may be located only in the processed image 101 and corrections may be applied afterwards.

The above described preparation and image processing, preferably including identifying the reference object 102, has two main purposes. First, by obtaining a processed image 105 with predetermined parameters the pixel-centimeter ratio can be derived, which is then used to calculate the actual dimensions of the jacket 100 from the image dimensions of the jacket 100. Second, the image 101 is resized to remove as much background as possible, which may speed up the method and minimize the risk for errors as the background is not needed for measuring the jacket 100.

Providing a reference object 102 is advantageous because extracting actual dimensions of an object in real world from a still image of the object is a general problem. While it may be envisioned to omit the reference object 102 and use other solutions for determining an actual size of an object from an image size of the object, using a reference object 102 provides a simple way that is independent from the device (e.g. mobile phone with camera) and from the operating system of the device. While the reference object 102 may be placed anywhere in the image 101 next to the jacket 100, it is preferable that the reference object 102 is placed to the left of the jacket 100, in contrast to the example in the image. Particularly if the statistical model for identifying the jacket 100 starts the analysis of the image 102 in the upper left corner and finishes in the lower right corner. Once the reference object 102 is found, the pixels-centimeter ratio can be determined, by measuring the number of pixels on the image and compare that with the actual size of the reference object 103.

Once the processed image 105 is obtained, the jacket 100 is classified using the statistical model trained and parametrized for this task and shown in Fig. 6 with exemplified classes 106. Given the class 106 and the processed image 105, a statistical model is applied to determine the class-specific landmarks 107 in the image 105. Example landmarks of the jacket 100 are shown in Fig. 7, such as shoulders, ends of the sleeve and corners at the bottom edge.

Once the locations of the landmark points 107 are determined, the coordinates of the points 107 will be saved and image distances (measured in pixels) are determined for desired relevant measurements. Using the pixel-centimeter ratio, the actual distances of the real world object can then be calculated from the image distances. Example relevant measurements are shown in Fig. 8, with 108 being the estimated shoulder width and 109 the estimated chest width. Other garments have other relevant measurements, based on the class, e.g. a leg length and waist width of a pair of trousers. To get the actual measurements each distance is multiplied with the pixel per cm ratio. This described method is a technical solution to calculate the actual relevant measurements of the piece of clothing.

It may be valuable to a customer, i.e. a person who intends to wear the piece of clothing, to know whether the piece of clothing will fit or not without ever trying it on. Therefore, a substantially similar method for measuring a body of the wearer can be provided, where the resulting relevant measurements are then compared. Here it will be appreciated that the "2D" measurements of the piece of clothing (e.g. "waist width") may be assigned to their corresponding 3D body measurement (e.g. "waist circumference" corresponding to "waist width").

More specifically, the obtained relevant measurements are evaluated with respect to a fit of the piece of clothing for this specific person (not shown in the drawings) using a statistical model, such as a neuronal network. The statistical model may be trained using customer data (i.e. relevant measurements of their body) and corresponding customer experience (i.e. customer's opinion like "fits well", "is too large", "sleeves are too short", "neck is too tight" etc.) and data for the piece of clothing (i.e. relevant measurements of the piece of clothing). For more accuracy, thus, at least two images from different viewing angles are taken form the wearer's body, e.g. (substantially) front view and one side view, where additional images from further viewing angles may further increase accuracy, e.g. at least a back view and possibly also a side view from the opposing side. Landmarks corresponding to a certain common relevant body measurement (e.g. waist circumference) may then be combined.

This combined method may provide great advantages for online shopping as the amount of returned purchases by be significantly reduced because the customers can "virtually" try on a piece of clothing they want to purchase. The measurements of the piece of clothing may be provided by the seller, whereas the customer can measure their body at home e.g. simply by using a smartphone with a camera, a computer with a webcam etc. Since the clothing measurements and body measurements are obtained substantially by the same method, they provide high compatibility for improved evaluation.

## Claims

1. A method for determining a fit of a piece of clothing (100) for a person who intends to wear the piece of clothing (100), comprising:
- measuring the piece of clothing (100) by processing an image (101) of the piece of clothing (100) to obtain at least one relevant measurement (108, 109) of the piece of clothing (100), the measuring comprising the following stages:
(A) obtaining an image (101) of the piece of clothing (100);
(B) executing perspective correction of the obtained image (101) to determine a perspective corrected image (104), and further calculating a scale ratio using the perspective corrected image (104);
(C) extracting the piece of clothing (100) from the perspective corrected image (104) and transforming the perspective corrected image (104) to a processed image (105) with consistent format;
(D) classifying the piece of clothing (100) in the processed image (105) by determining a type of the piece of clothing (100);
(E) identifying a plurality of landmarks (107) of the piece of clothing (100) in the processed image (105) based on the determined type of the piece of clothing (100); and
(F) calculating at least one relevant measurement (108, 109) of the piece of clothing using the identified landmarks (108, 109) and the scale ratio;
**characterized in that** the method further comprises:
- measuring at least a part of the person's body for which the piece of clothing (100) is meant to be worn to obtain at least one relevant body measurement, the at least one relevant body measurement preferably corresponding to the at least one obtained relevant measurement (108, 109) of the piece of clothing (100); and
- estimating, using a fitting statistical model, a fit of the piece of clothing (100) for the person, wherein the fitting statistical model is parameterized based on body measurements and clothing measurements as inputs and respective feedback on the fit of piece of clothing as outputs, wherein the distance between the estimated outputs and the real outputs is minimized.

2. The method of claim 1, wherein a reference object (103) with known real-world dimensions is placed in the vicinity of the piece of clothing (100), wherein:
- in stage (A) an image (101) of the piece of clothing (100) and the reference object (103) is obtained, such that in the obtained image (101) the reference object (102) is subject to the same perspective distortion as the piece of clothing (100); and
- in stage (B) the reference object (102) is detected in the obtained image (101) executing perspective correction of the obtained image (101) using the detected reference object (102).

3. The method of claim 2, wherein the scale ratio is calculated based on the known real-world dimensions of the reference object (103) and the pixel dimensions of the reference object (102).

4. The method of claim 2 or 3, wherein in stage (B) the perspective correction is executed based on a relation between the original reference object (103) and the detected reference object (102) in the obtained image (101), the method further comprising:
- determining at least one transformation operation that is necessary to transform the detected reference object (103) of the image (102) to the original reference object (103); and
- applying the at least one transformation operation to the obtained image (101) resulting in the perspective corrected image (104).

5. The method of claim 1, wherein in stage (B) the perspective correction is executed based on a spatial relation between the obtained image (101) and the piece of clothing, the method further comprising:
- determining at least one transformation operation that defines the spatial relation; and
- applying the at least one transformation operation to the obtained image (101) resulting in the perspective corrected image (104),
wherein the method preferably further comprises:
- determining the spatial relation by measuring a distance between an image capturing device and the piece of clothing (100) and/or by obtaining at least two images of the piece of clothing (100) from different points of view for which the spatial correlation is known.

6. The method of any one claims 1 to 5, further comprising in stage (C):
- estimating, using a first statistical model, a bounding box which defines borders of the processed image (105) that represent borders around the piece of clothing (100), wherein, based on the estimated bounding box around the piece of clothing (100), the piece of clothing (100) is extracted and transformed to the consistent format.

7. The method of any one of claims 1 to 6, further comprising in stage (D):
- estimating, using a second statistical model, a probability of the piece of clothing (100) to be of a particular type, wherein the piece of clothing (100) is classified by selecting the type with the highest probability among a predetermined number of types of pieces of clothing.

8. The method of any one of claims 1 to 7, further comprising in stage (E):
- identifying, using a third statistical model, coordinates of all landmarks (107) in the processed image (105).

9. The method of claim 7 and 8, wherein the third statistical model is a type-specific statistical model, wherein a respective type-specific statistical model is provided for each of the predetermined number of types of pieces of clothing, wherein the type-specific statistical model is preferably chosen based on the determined type of the piece of clothing (100).

10. The method of any one of claims 6 to 9, wherein at least one of the first, second and third statistical models is parameterized based on the statistical population of image data as inputs and image content data as outputs, wherein the distance between the estimated outputs and the real outputs is minimized.

11. The method of any one of claims 6 to 10, wherein the statistical models are Neural Networks with any architecture that can conceive image data as inputs and output task-specific image content data.

12. The method of any one of claims 1 to 11, further comprising in stage (F):
- determining a pixel distance between at least two of the identified landmarks (107) associated with the at least one relevant measurement of the piece of clothing (100); and
- transforming the determined pixel distance to a real-world measurement using the scale ratio.

13. The method of any one of claims 1 to 12, wherein the fitting statistical model is obtained by machine learning, preferably Neural Networks.

14. The method of any one of claims 1 to 13, wherein the body measuring comprises:
(a) obtaining at least one image of the part of the body, preferably at least two images including a first image from a frontal point of view and a second image from a side point of view;
(b) executing perspective correction of the obtained image(s) to determine a respective perspective corrected image, and further calculating a scale ratio using the perspective corrected image;
(c) extracting the part of the body from the perspective corrected image and transforming the perspective corrected image to a processed image with consistent format;
(d) identifying a plurality of landmarks of the part of the body in the processed image; and
(e) calculating at least one relevant measurement of the part of the body using the identified landmarks and the scale ratio.

15. A computer program product, comprising program code configured to, when loaded into a computing device having at least one processor, perform the method of any one of claims 1 to 14 when executed by the at least one processor.

## Patentansprüche

1. Verfahren zur Bestimmung der Passform eines Kleidungsstücks (100) für eine Person, die das Kleidungsstück (100) zu tragen beabsichtigt, umfassend:
- Vermessen des Kleidungsstücks (100) durch Verarbeiten eines Bildes (101) des Kleidungsstücks (100), um mindestens ein relevantes Maß (108, 109) des Kleidungsstücks (100) zu erhalten, wobei das Vermessen die folgenden Schritte umfasst:
(A) Erhalten eines Bildes (101) des Kleidungsstücks (100);
(B) Ausführen einer perspektivischen Korrektur des erhaltenen Bildes (101), um ein perspektivisch korrigiertes Bild (104) zu bestimmen, und des Weiteren Berechnen eines Maßstabsverhältnisses unter Verwendung des perspektivisch korrigierten Bildes (104);
(C) Extrahieren des Kleidungsstücks (100) aus dem perspektivisch korrigierten Bild (104) und Umwandeln des perspektivisch korrigierten Bildes (104) in ein verarbeitetes Bild (105) mit einheitlichem Format;
(D) Klassifizierung des Kleidungsstücks (100) in dem verarbeiteten Bild (105) durch Bestimmung eines Typs des Kleidungsstücks (100);
(E) Identifizieren einer Mehrzahl von Orientierungspunkten (107) des Kleidungsstücks (100) in dem verarbeiteten Bild (105) auf der Grundlage des bestimmten Typs des Kleidungsstücks (100); und
(F) Berechnen mindestens eines relevanten Maßes (108, 109) des Kleidungsstücks unter Verwendung der identifizierten Orientierungspunkte (108, 109) und des Maßstabsverhältnisses;
**dadurch gekennzeichnet, dass** das Verfahren des Weiteren umfasst:
- Vermessen mindestens eines Teils des Körpers der Person, an dem das Kleidungsstück (100) getragen werden soll, um mindestens ein relevantes Körpermaß zu erhalten, wobei das mindestens eine relevante Körpermaß vorzugsweise dem mindestens einen erhaltenen relevanten Maß (108, 109) des Kleidungsstücks (100) entspricht; und
- Schätzen, unter Verwendung eines statistischen Anpassungsmodells, einer Passform des Kleidungsstücks (100) für die Person, wobei das statistische Anpassungsmodell auf der Grundlage von Körpermaßen und Kleidungsmaßen als Eingaben und entsprechenden Rückmeldungen über die Passform des Kleidungsstücks als Ausgaben parametrisiert wird, wobei der Abstand zwischen den geschätzten Ausgaben und den realen Ausgaben minimiert wird.

2. Verfahren nach Anspruch 1, wobei ein Referenzobjekt (103) mit bekannten realen Abmessungen in der Nähe des Kleidungsstücks (100) platziert wird, wobei:
- in Schritt (A) ein Bild (101) des Kleidungsstücks (100) und des Referenzobjekts (103) erhalten wird, so dass in dem erhaltenen Bild (101) das Referenzobjekt (102) der gleichen perspektivischen Verzerrung unterliegt wie das Kleidungsstück (100); und
- in Schritt (B) das Referenzobjekt (102) in dem erhaltenen Bild (101) detektiert wird, wobei eine perspektivische Korrektur des erhaltenen Bildes (101) unter Verwendung des detektierten Referenzobjekts (102) durchgeführt wird.

3. Verfahren nach Anspruch 2, wobei das Maßstabsverhältnis auf der Grundlage der bekannten realen Abmessungen des Referenzobjekts (103) und der Pixelabmessungen des Referenzobjekts (102) berechnet wird.

4. Verfahren nach Anspruch 2 oder 3, wobei in Schritt (B) die perspektivische Korrektur auf der Grundlage einer Beziehung zwischen dem ursprünglichen Referenzobjekt (103) und dem detektierten Referenzobjekt (102) in dem erhaltenen Bild (101) ausgeführt wird, wobei das Verfahren des Weiteren umfasst:
- Bestimmen mindestens einer Transformationsoperation, die erforderlich ist, um das erfasste Referenzobjekt (103) des Bildes (102) in das ursprüngliche Referenzobjekt (103) zu transformieren; und
- Anwendung der mindestens einen Transformationsoperation auf das erhaltene Bild (101), was zu dem perspektivisch korrigierten Bild (104) führt.

5. Verfahren nach Anspruch 1, wobei in Schritt (B) die perspektivische Korrektur auf der Grundlage einer räumlichen Beziehung zwischen dem erhaltenen Bild (101) und dem Kleidungsstück ausgeführt wird, wobei das Verfahren des Weiteren umfasst:
- Bestimmen mindestens einer Transformationsoperation, die die räumliche Beziehung definiert; und
- Anwenden der mindestens einen Transformationsoperation auf das erhaltene Bild (101), was zu dem perspektivisch korrigierten Bild (104) führt,
wobei das Verfahren vorzugsweise weiterhin umfasst:
- Bestimmen der räumlichen Beziehung durch Messen eines Abstands zwischen einer Bilderfassungsvorrichtung und dem Kleidungsstück (100) und/oder durch Erhalten von mindestens zwei Bildern des Kleidungsstücks (100) aus verschiedenen Blickwinkeln, für die die räumliche Korrelation bekannt ist.

6. Verfahren nach einem der Ansprüche 1 bis 5, des Weiteren umfassend in Schritt (C):
- Schätzen, unter Verwendung eines ersten statistischen Modells, eines Begrenzungsrahmens, der Grenzen des verarbeiteten Bildes (105) definiert, die Grenzen um das Kleidungsstück (100) darstellen, wobei, basierend auf dem geschätzten Begrenzungsrahmen um das Kleidungsstück (100), das Kleidungsstück (100) extrahiert und in das konsistente Format transformiert wird.

7. Verfahren nach einem der Ansprüche 1 bis 6, des Weiteren umfassend in Schritt (D):
- Schätzen, unter Verwendung eines zweiten statistischen Modells, einer Wahrscheinlichkeit, dass das Kleidungsstück (100) zu einem bestimmten Typ gehört, wobei das Kleidungsstück (100) klassifiziert wird, indem der Typ mit der höchsten Wahrscheinlichkeit aus einer vorbestimmten Anzahl von Typen von Kleidungsstücken ausgewählt wird.

8. Verfahren nach einem der Ansprüche 1 bis 7, des Weiteren umfassend in Schritt (E):
- Identifizieren, unter Verwendung eines dritten statistischen Modells, der Koordinaten aller Orientierungspunkte (107) im bearbeiteten Bild (105).

9. Verfahren nach Anspruch 7 und 8, wobei das dritte statistische Modell ein typspezifisches statistisches Modell ist, wobei für jeden der vorgegebenen Anzahl von Kleidungsstücktypen ein entsprechendes typspezifisches statistisches Modell vorgesehen ist, wobei das typspezifische statistische Modell vorzugsweise auf der Grundlage des ermittelten Typs des Kleidungsstücks (100) ausgewählt wird.

10. Verfahren nach einem der Ansprüche 6 bis 9, wobei mindestens eines des ersten, zweiten und dritten statistischen Modells auf der Grundlage der statistischen Population von Bilddaten als Eingaben und Bildinhaltsdaten als Ausgaben parametrisiert wird, wobei der Abstand zwischen den geschätzten Ausgaben und den realen Ausgaben minimiert wird.

11. Verfahren nach einem der Ansprüche 6 bis 10, wobei es sich bei den statistischen Modellen um neuronale Netze mit einer beliebigen Architektur handelt, die Bilddaten als Eingaben empfangen und aufgabenspezifische Bildinhaltsdaten ausgeben können.

12. Verfahren nach einem der Ansprüche 1 bis 11, des Weiteren umfassend in Schritt (F):
- Bestimmen eines Pixelabstands zwischen mindestens zwei der identifizierten Orientierungspunkte (107), die dem mindestens einen relevanten Maß des Kleidungsstücks (100) zugeordnet sind; und
- Umwandeln des ermittelten Pixelabstands in ein reales Maß unter Verwendung des Maßstabsverhältn isses.

13. Verfahren nach einem der Ansprüche 1 bis 12, wobei das passende statistische Modell durch maschinelles Lernen, vorzugsweise durch neuronale Netze, gewonnen wird.

14. Verfahren nach einem der Ansprüche 1 bis 13, wobei das Körpervermessen umfasst:
(a) Erhalten mindestens eines Bildes des Körperteils, vorzugsweise mindestens zweier Bilder, einschließlich eines ersten Bildes aus einer Frontalperspektive und eines zweiten Bildes aus einer Seitenperspektive;
(b) Ausführen einer perspektivischen Korrektur des/der erhaltenen Bildes/Bilder, um ein entsprechendes perspektivisch korrigiertes Bild zu bestimmen, und des Weiteren Berechnen eines Maßstabsverhältnisses unter Verwendung des perspektivisch korrigierten Bildes;
(c) Extrahieren des Körperteils aus dem perspektivisch korrigierten Bild und Umwandeln des perspektivisch korrigierten Bildes in ein verarbeitetes Bild mit einheitlichem Format;
(d) Identifizieren einer Mehrzahl von Orientierungspunkten des Körperteils in dem verarbeiteten Bild; und
(e) Berechnen mindestens eines relevanten Maßes des Körperteils unter Verwendung der identifizierten Orientierungspunkte und des Maßstabsverhältnisses.

15. Computerprogrammprodukt, das Programmcode umfasst, der so konfiguriert ist, dass er, wenn er in ein Computergerät mit mindestens einem Prozessor geladen wird, das Verfahren nach einem der Ansprüche 1 bis 14 durchführt, wenn er von dem mindestens einen Prozessor ausgeführt wird.

## Revendications

1. Procédé pour la détermination d'un ajustement d'un vêtement (100) pour une personne qui prévoit de porter le vêtement (100), comprenant :
- la mesure du vêtement (100) par le traitement d'une image (101) du vêtement (100) pour obtenir au moins une mesure pertinente (108, 109) du vêtement (100), la mesure comprenant les étapes suivantes :
(A) l'obtention d'une image (101) du vêtement (100) ;
(B) l'exécution d'une correction de perspective de l'image (101) obtenue pour déterminer une image à perspective corrigée (104), et en outre le calcul d'un rapport d'échelle à l'aide de l'image à perspective corrigée (104) ;
(C) l'extraction du vêtement (100) à partir de l'image à perspective corrigée (104) et la transformation de l'image à perspective corrigée (104) en une image traitée (105) ayant un format cohérent ;
(D) le classement du vêtement (100) dans l'image traitée (105) par la détermination d'un type du vêtement (100) ;
(E) l'identification d'une pluralité de repères (107) du vêtement (100) dans l'image traitée (105) sur la base du type déterminé du vêtement (100) ; et
(F) le calcul d'au moins une mesure pertinente (108, 109) du vêtement à l'aide des repères identifiés (108, 109) et du rapport d'échelle ;
**caractérisé en ce que** le procédé comprend en outre :
- la mesure d'au moins une partie du corps de la personne pour laquelle le vêtement (100) est destiné à être porté pour obtenir au moins une mesure corporelle pertinente, l'au moins une mesure corporelle pertinente correspondant de préférence à l'au moins une mesure pertinente (108, 109) obtenue du vêtement (100) ; et
- l'estimation, à l'aide d'un modèle statistique d'ajustement, d'un ajustement du vêtement (100) pour la personne, dans lequel le modèle statistique d'ajustement est paramétré sur la base de mesures corporelles et de mesures vestimentaires en tant qu'entrées et d'un retour respectif sur l'ajustement du vêtement en tant que sorties, dans lequel la distance entre les sorties estimées et les sorties réelles est minimisée.

2. Procédé selon la revendication 1, dans lequel un objet de référence (103) ayant des dimensions réelles connues est placé au voisinage du vêtement (100), dans lequel:
- à l'étape (A) une image (101) du vêtement (100) et de l'objet de référence (103) est obtenue, de sorte que dans l'image (101) obtenue, l'objet de référence (102) soit soumis à la même distorsion de perspective que le vêtement (100) ; et
- à l'étape (B) l'objet de référence (102) est détecté dans l'image (101) obtenue en exécutant une correction de perspective de l'image (101) obtenue à l'aide de l'objet de référence (102) détecté.

3. Procédé selon la revendication 2, dans lequel le rapport d'échelle est calculé sur la base des dimensions réelles connues de l'objet de référence (103) et des dimensions en pixels de l'objet de référence (102).

4. Procédé selon la revendication 2 ou 3, dans lequel à l'étape (B) la correction de perspective est exécutée sur la base d'une relation entre l'objet de référence (103) d'origine et l'objet de référence (102) détecté dans l'image (101) obtenue, le procédé comprenant en outre :
- la détermination d'au moins une opération de transformation qui est nécessaire pour transformer l'objet de référence (103) détecté de l'image (102) en l'objet de référence (103) d'origine ; et
- l'application de l'au moins une opération de transformation sur l'image (101) obtenue résultant en l'image à perspective corrigée (104).

5. Procédé selon la revendication 1, dans lequel à l'étape (B) la correction de perspective est exécutée sur la base d'une relation spatiale entre l'image (101) obtenue et le vêtement, le procédé comprenant en outre :
- la détermination d'au moins une opération de transformation qui définit la relation spatiale ; et
- l'application de l'au moins une opération de transformation sur l'image (101) obtenue résultant en l'image à perspective corrigée (104),
dans lequel le procédé comprend de préférence en outre :
- la détermination de la relation spatiale par la mesure d'une distance entre un dispositif de capture d'image et le vêtement (100) et/ou par l'obtention d'au moins deux images du vêtement (100) depuis différents points de vue pour lesquels la corrélation spatiale est connue.

6. Procédé selon l'une quelconque des revendications 1 à 5, comprenant en outre à l'étape (C) :
- l'estimation, à l'aide d'un premier modèle statistique, d'un cadre de délimitation qui définit des limites de l'image traitée (105) qui représentent des limites autour du vêtement (100), dans lequel, sur la base du cadre de délimitation estimé autour du vêtement (100), le vêtement (100) est extrait et transformé en le format cohérent.

7. Procédé selon l'une quelconque des revendications 1 à 6, comprenant en outre à l'étape (D) :
- l'estimation, à l'aide d'un deuxième modèle statistique, d'une probabilité que le vêtement (100) soit d'un type particulier, dans lequel le vêtement (100) est classé par la sélection du type ayant la plus haute probabilité parmi un nombre prédéterminé de types de vêtements.

8. Procédé selon l'une quelconque des revendications 1 à 7, comprenant en outre à l'étape (E) :
- l'identification, à l'aide d'un troisième modèle statistique, de coordonnées de tous les repères (107) dans l'image traitée (105).

9. Procédé selon les revendications 7 et 8, dans lequel le troisième modèle statistique est un modèle statistique spécifique à un type, dans lequel un modèle statistique spécifique à un type respectif est fourni pour chacun du nombre prédéterminé de types de vêtements, dans lequel le modèle statistique spécifique à un type est de préférence choisi sur la base du type déterminé du vêtement (100).

10. Procédé selon l'une quelconque des revendications 6 à 9, dans lequel au moins l'un parmi les premier, deuxième et troisième modèles statistiques est paramétré sur la base de la population statistique de données d'image en tant qu'entrées et de données de contenu d'image en tant que sorties, dans lequel la distance entre les sorties estimées et les sorties réelles est minimisée.

11. Procédé selon l'une quelconque des revendications 6 à 10, dans lequel les modèles statistiques sont des réseaux neuronaux ayant une quelconque architecture qui peut concevoir des données d'image en tant qu'entrées et délivrer en sortie des données de contenu d'image spécifiques à une tâche.

12. Procédé selon l'une quelconque des revendications 1 à 11, comprenant en outre à l'étape (F) :
- la détermination d'une distance en pixels entre au moins deux des repères identifiés (107) associés à l'au moins une mesure pertinente du vêtement (100) ; et
- la transformation de la distance en pixels déterminée en une mesure réelle à l'aide du rapport d'échelle.

13. Procédé selon l'une quelconque des revendications 1 à 12, dans lequel le modèle statistique d'ajustement est obtenu par apprentissage machine, de préférence par réseaux neuronaux.

14. Procédé selon l'une quelconque des revendications 1 à 13, dans lequel la mesure corporelle comprend :
(a) l'obtention d'au moins une image de la partie du corps, de préférence d'au moins deux images comportant une première image depuis un point de vue frontal et une deuxième image depuis un point de vue latéral ;
(b) l'exécution d'une correction de perspective de la ou des image(s) obtenue(s) pour déterminer une image à perspective corrigée respective, et en outre le calcul d'un rapport d'échelle à l'aide de l'image à perspective corrigée ;
(c) l'extraction de la partie du corps à partir de l'image à perspective corrigée et la transformation de l'image à perspective corrigée en une image traitée ayant un format cohérent ;
(d) l'identification d'une pluralité de repères de la partie du corps dans l'image traitée ; et
(e) le calcul d'au moins une mesure pertinente de la partie du corps à l'aide des repères identifiés et du rapport d'échelle.

15. Produit programme d'ordinateur, comprenant un code de programme configuré pour, lorsqu'il est chargé dans un dispositif informatique ayant au moins un processeur, réaliser le procédé selon l'une quelconque des revendications 1 à 14 lors de son exécution par l'au moins un processeur.
